# EUROPÄISCHE PATENTSCHRIFT

(11) **EP 2 230 135 B1**
(45) Veröffentlichungstag und Bekanntmachung des Hinweises auf die Patenterteilung: **02.08.2017**
(21) Anmeldenummer: 10155762.7
(22) Anmeldetag: 08.03.2010
(51) Int. Cl.: B60R 16/03, H02J 1/08

(54) **Vorrichtung**
Device
Dispositif

(30) Priorität: 17.03.2009 DE 102009013232
(43) Veröffentlichungstag der Anmeldung: 22.09.2010
(73) Patentinhaber: Continental Automotive GmbH, 30165 Hannover (DE)
(72) Erfinder: Hemmat Esfandabadi, Riaz, 78126, Königsfeld-Neuhausen (DE); Volk, Stefan, 78141, Schönwald (DE)

(56) Entgegenhaltungen:
- US-A- 4 908 523
- US-A- 5 191 529
- US-A1- 2001 030 469

## Beschreibung

Die Erfindung betrifft eine Vorrichtung, insbesondere eine On-Board-Unit für ein Fahrzeug, zum Beispiel eine Maut-On-Board-Unit oder einen Tachographen oder einen Teil einer solchen On-Board-Unit, die mindestens einen Energiespeicher zum Bereitstellen einer Betriebsspannung der Vorrichtung sowie mindestens einen Anschluss für eine externe Energiequelle zum Bereitstellen der Betriebsspannung aufweist.

In der DE 10 2005 026 998 A1 ist eine Anordnung mit einem Registriergerät offenbart. Verschiedene Module des Registriergeräts verbrauchen Energie und sind abschaltbar sowie einschaltbar ausgebildet. Im Falle einer Änderung einer Betriebsspannung einer Energieversorgung werden einige der Module abgeschaltet oder eingeschaltet. Dazu verbindet oder unterbricht ein Stromversorgungsmodul Verbindungen der Module zu einer Stromquelle infolge einer Ansteuerung eines Mikrocontrollers.

Die US 2001/0030469 A1 offenbart ein Unterstützungsenergiequellenmodul, das eine Unterstützungsenergiequelle steuert zur Versorgung mit Energie von einer Batterie, die von einem Wechselstromanschluss geladen wird, an eine elektrische Vorrichtung, falls der Wechselstromanschluss unterbrochen ist.

Die US 5,191,523 offenbart ein Zwei-Batterien-Unterstützungssystem, das Energie bereitstellt für ausgewählte Teile eines Fahrtenschreibers entsprechend einer Lastabgabestrategie zur Maximierung der Zeitdauer von Funktion und Datenspeicherung, falls eine Primärenergieversorgung unterbrochen wird.

Die Aufgabe der Erfindung ist, eine Vorrichtung zu schaffen, die einen Energiespeicher zum Bereitstellen einer Betriebsspannung der Vorrichtung sowie einen Anschluss für eine externe Energiequelle zum Bereitstellen der Betriebsspannung umfasst und die bei nicht verfügbarer Betriebsspannung der externen Energiequelle und bei zumindest teilweise geladenem Energiespeicher eine lange Lagerdauer der Vorrichtung ermöglicht, ohne dass der Energiespeicher während der Lagerung vollständig entladen wird, und die bei Anschließen der externen Energiequelle eine automatische Aufnahme ihres Betriebs ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Vorrichtung, die mindestens eine Schaltungsanordnung, mindestens einen Energiespeicher, mindestens einen Anschluss, mindestens eine Betriebsspannungsleitung und eine Schalteinrichtung umfasst. Die mindestens eine Schaltungsanordnung weist mindestens einen Betriebsspannungseingang und mindestens einen Schaltausgang auf. Der mindestens eine Energiespeicher ist vorgesehen zum Bereitstellen mindestens einer Betriebsspannung für die Schaltungsanordnung. Der mindestens eine Anschluss ist mit einer jeweiligen externen Energiequelle koppelbar zum Bereitstellen der mindestens einen Betriebsspannung. Die mindestens eine Betriebsspannungsleitung ist durch die mindestens eine externe Energiequelle und den mindestens einen Energiespeicher mit der mindestens einen Betriebsspannung beaufschlagbar. Der mindestens eine Schalter ist eingangsseitig elektrisch mit der mindestens einen Betriebsspannungsleitung und ausgangsseitig elektrisch mit dem mindestens einen Betriebsspannungseingang gekoppelt. Der mindestens eine Schalter weist einen Schalteingang auf und ist ausgebildet, abhängig von einem Schaltsignal an dem Schalteingang die mindestens eine Betriebsspannungsleitung elektrisch mit dem mindestens einen Betriebsspannungseingang zu koppeln oder diese elektrisch voneinander trennen. Die Schalteinrichtung ist eingangsseitig elektrisch mit dem mindestens einen Anschluss gekoppelt zum Erkennen einer Verfügbarkeit der mindestens einen von der mindestens einen externen Energiequelle bereitstellbaren Betriebsspannung und ist ferner eingangsseitig elektrisch mit dem mindestens einen Schaltausgang gekoppelt. Die Schalteinrichtung ist ausgangsseitig elektrisch mit dem Schalteingang des mindestens einen Schalters gekoppelt zum Zuführen des Schaltsignals und ist ausgebildet, das Schaltsignal zu erzeugen abhängig von der Verfügbarkeit der von der mindestens einen externen Energiequelle bereitstellbaren mindestens einen Betriebsspannung und abhängig von einem von der Schaltungsanordnung an dem mindestens einen Schaltausgang bereitstellbaren Ausschaltsignal.

Die Schalteinrichtung ist als eine bistabile Kippstufe ausgebildet. Die Kippstufe ist ausgebildet zum Erzeugen des Schaltsignals zum Einschalten des mindestens einen Schalters, wenn die mindestens eine von der mindestens einen externen Energiequelle bereitstellbare Betriebsspannung an dem mindestens einen Anschluss verfügbar ist unabhängig von dem Ausschaltsignal. Die Kippstufe ist ferner ausgebildet zum Ausschalten des mindestens einen Schalters, wenn die mindestens eine von der mindestens einen externen Energiequelle bereitstellbare Betriebsspannung nicht an dem mindestens einen Anschluss verfügbar ist und das Ausschaltsignal das Ausschalten signalisiert. Die Kippstufe ist ferner ausgebildet zum Beibehalten eines aktuellen Schaltzustands des mindestens einen Schalters, wenn die mindestens eine von der mindestens einen externen Energiequelle bereitstellbare Betriebsspannung nicht an dem mindestens einen Anschluss verfügbar ist und das Ausschaltsignal das Ausschalten nicht signalisiert. Eine solche Kippstufe ist sehr einfach und kostengünstig herstellbar und kann insbesondere energieeffizient sein, so dass der mindestens eine Energiespeicher auch bei sehr langer Lagerung, zum Beispiel über mehrere Monate, nur wenig entladen wird. Das Ausschalten des mindestens einen Schalters erfolgt nur dann, wenn keine externe Energiequelle die mindestens eine Betriebsspannung an dem mindestens einen Anschluss bereitsstellt.

Die Schalteinrichtung weist eine erste und eine zweite Signalleitung auf. Die erste Signalleitung ist mit dem Schalteingang elektrisch gekoppelt. Die erste Signalleitung ist über einen ersten Widerstand mit der Betriebsspannungsleitung und über einen ersten Transistor mit einem Bezugspotenzial verbunden. Die zweite Signalleitung ist über einen zweiten Widerstand mit der Betriebsspannungsleitung und über einen zweiten Transistor mit dem Bezugspotenzial verbunden. Die erste Signalleitung ist über eine Reihenschaltung eines dritten Widerstands und eines dritten Transistors mit der Betriebsspannungsleitung verbunden. Ein Steueranschluss des dritten Transistors ist mit der zweiten Signalleitung verbunden. Die zweite Signalleitung ist über eine Reihenschaltung eines vierten Widerstands und eines vierten Transistors mit der Betriebsspannungsleitung verbunden. Ein Steueranschluss des vierten Transistors ist mit der ersten Signalleitung verbunden. Die erste Signalleitung ist über einen ersten Kondensator mit dem Bezugspotenzial verbunden. Der Vorteil ist, dass dies sehr einfach ist und einen geringen Energiebedarf ermöglicht. Bevorzugt ist die Schaltungseinrichtung mit diskreten Bauelementen aufgebaut. Dann ist es durch geeignete Wahl und Dimensionierung der Bauelemente besonders einfach möglich, den geringen Energiebedarf zu ermöglichen.

Mindestens eine Einschalteinrichtung ist vorgesehen, die eingangsseitig elektrisch jeweils mit einem Anschluss gekoppelt ist und die ausgangsseitig elektrisch jeweils mit der ersten Signalleitung verbunden ist und die ausgebildet ist, bei Verfügbarkeit der mindestens einen von der mindestens einen externen Energiequelle bereitstellbaren Betriebsspannung einen Pegel der ersten Signalleitung auf einen Low-Pegel zu ziehen. Ferner ist mindestens eine Ausschalteinrichtung vorgesehen, die eingangsseitig elektrisch jeweils mit dem mindestens einen Schaltausgang gekoppelt ist und die ausgangsseitig elektrisch jeweils mit der zweiten Signalleitung verbunden ist und die ausgebildet ist, abhängig von dem Ausschaltsignal einen Pegel der zweiten Signalleitung auf den Low-Pegel zu ziehen. Der Vorteil ist, dass dies sehr einfach ist und dass das Ein- und Ausschalten des mindestens einen Schalters so sehr einfach und zuverlässig erfolgen kann. Insbesondere ist auf diese Weise auch eine zuverlässige Verriegelung realisiert, die das Ausschalten des mindestens einen Schalters verhindert, solange die mindestens eine von der mindestens einen externen Energiequelle bereitstellbare Betriebsspannung verfügbar ist. Ein versehentliches Ausschalten und infolge dessen ein Ausfall der Vorrichtung kann so zuverlässig verhindert werden.

Der Vorteil ist, dass die Schaltungsanordnung, die einen elektrischen Verbraucher der Vorrichtung repräsentiert, ihre Betriebsspannung selbst abschalten kann. Dadurch kann ein Energiebedarf der Vorrichtung besonders gering sein. Dies ermöglicht eine lange Lagerdauer mit nur geringer Entladung des Energiespeichers, wenn die durch die externe Energiequelle bereitstellbare Betriebsspannung nicht verfügbar ist. Diese Betriebsspannung ist insbesondere dann nicht verfügbar, wenn sie nicht an dem mindestens einen Anschluss bereitgestellt wird. Dies ist insbesondere dann der Fall, wenn die externe Energiequelle nicht an den jeweiligen Anschluss angeschlossen ist, zum Beispiel während der Lagerung der Vorrichtung, zum Beispiel nach einer Endmontage der Vorrichtung, oder in Service-Fällen wie bei Wartungs- oder Reparaturarbeiten. Die geringe Entladung kann eine lange Lebensdauer des mindestens einen Energiespeichers ermöglichen. Ferner muss der mindestens eine Energiespeicher vor der Lagerung nicht abgeklemmt und vor Inbetriebnahme nicht wieder angeklemmt werden. Dadurch kann ein Installations- oder Montageaufwand besonders gering sein. Ferner ist dadurch, dass die Schaltungsanordnung ihre Betriebsspannung selbst abschalten kann, auch eine Abschaltung der Vorrichtung beispielsweise bei Gefahrguttransporten möglich, ohne dass der mindestens eine Energiespeicher zuvor abgeklemmt und anschließend wieder angeklemmt werden müsste. Es muss ferner auch kein mechanischer Schalter vorgesehen sein zum Aus- und Einschalten der Vorrichtung, der gegebenenfalls schwer zugänglich sein oder leicht versehentlich betätigt werden könnte.

Dadurch, dass das Schaltsignal abhängig von der Verfügbarkeit der von der mindestens einen externen Energiequelle bereitstellbaren mindestens einen Betriebsspannung erzeugt wird, besteht einerseits insbesondere die Möglichkeit, den mindestens einen Schalter bei Verfügbarkeit dieser Betriebsspannung automatisch wieder einzuschalten zum Versorgen der Schaltungsanordnung mit elektrischer Energie, und besteht andererseits insbesondere die Möglichkeit, eine Verriegelung derart zu bewirken, dass das Ausschalten des mindestens einen Schalters durch das Ausschaltsignal nur dann möglich ist, wenn die von der mindestens einen externen Energiequelle bereitstellbare mindestens eine Betriebsspannung nicht verfügbar ist.

Der mindestens eine Energiespeicher ist insbesondere ein jeweiliger interner Energiespeicher der Vorrichtung. Der mindestens eine Energiespeicher ist insbesondere als ein Akkumulator ausgebildet und derart dimensioniert, dass dieser eine Ladungsmenge von bevorzugt mehr als 1000 Milliamperestunden und vorzugsweise mehr als 1500 Milliamperestunden speichern kann und die Vorrichtung und insbesondere die Schaltungsanordnung bei fehlender Verfügbarkeit der von der mindestens einen externen Energiequelle bereitstellbaren mindestens einen Betriebsspannung dadurch mindestens eine Stunde lang betrieben werden kann und bevorzugt mindestens drei Stunden lang betrieben werden kann.

Die Vorrichtung ist insbesondere eine On-Board-Unit für ein Fahrzeug, zum Beispiel eine Maut-On-Board-Unit zum Erfassen von Straßenbenutzungsgebühren oder ein Tachograph zum Erfassen einer Fahrzeugnutzung und Überwachen von Nutzungszeiten oder ein Teil einer solchen oder anderen On-Board-Unit. Die Vorrichtung kann jedoch beispielsweise auch Notstromversorgung oder unterbrechungsfreie Stromversorgung oder ein anderes akkumulator- oder batteriebetriebenes Gerät sein. Die mindestens eine externe Energiequelle umfasst beispielsweise eine Fahrzeugbatterie und/oder einen elektrischen Generator des Fahrzeugs. Die von der mindestens einen externen Energiequelle bereitstellbare mindestens eine Betriebsspannung wird beispielsweise an "Klemme 30" des Fahrzeugs bereitgestellt. Entsprechend ist der mindestens eine Anschluss der Vorrichtung insbesondere vorgesehen zum elektrischen Koppeln mit "Klemme 30" des Fahrzeugs.

In einer vorteilhaften Ausgestaltung ist die Schaltungsanordnung als Recheneinrichtung ausgebildet oder umfasst die Schaltungsanordnung die mindestens eine Recheneinrichtung. Die mindestens eine Recheneinrichtung ist über die mindestens eine über den mindestens einen Betriebsspannungseingang bereitstellbare Betriebsspannung versorgbar und ist ausgebildet zum Erzeugen des Ausschaltsignals. Der Vorteil ist, dass eine solche Recheneinrichtung, die beispielsweise auch als Mikrocontrollersystem, als Mikrocontroller oder als Mikroprozessor bezeichnet werden kann, einfach für Steuerungsaufgaben nutzbar ist und für solche Zwecke im Allgemeinen sowieso bereits vorgesehen ist. Eine solche Recheneinrichtung kann dann sehr einfach auch das Ausschaltsignal ausgeben, wobei auch sehr einfach ein aktueller Betriebszustand der Vorrichtung berücksichtigt werden kann. Beispielsweise ist die Recheneinrichtung zur Steuerung der On-Board-Unit vorgesehen. Ferner kann durch Ausschalten des mindestens einen Schalters und dadurch Abtrennen der Betriebsspannung von dem mindestens einen Betriebsspannungseingang und somit auch von der Recheneinrichtung möglicherweise der Bedarf an elektrischer Energie besonders stark reduziert werden.

In einer weiteren vorteilhaften Ausgestaltung umfasst die Ausschalteinrichtung ein Verzögerungsglied zum Verzögern des Ziehens des Pegels der zweiten Signalleitung auf den Low-Pegel in Bezug auf das Ausschaltsignal. Dies ermöglicht ein besonders zuverlässiges Ausschalten des mindestens einen Schalters.

In einer weiteren vorteilhaften Ausgestaltung ist die zweite Signalleitung über einen zweiten Kondensator mit dem Bezugspotenzial verbunden und weist der erste Kondensator eine größere Kapazität auf als der zweite Kondensator. Dies ermöglicht eine zuverlässige Inbetriebnahme der Vorrichtung mit einem vorgegebenen Schaltzustand des mindestens einen Schalters. In dem vorgegebenen Schaltzustand ist der mindestens eine Schalter bevorzugt eingeschaltet.

Ausführungsbeispiele der Erfindung sind im Folgenden anhand der schematischen Zeichnungen erläutert. Es zeigen:
- Figur 1: ein Blockdiagramm einer Vorrichtung,
- Figur 2: eine Ausführungsform eines Teils der Vorrichtung,
- Figur 3: eine Ausführungsform einer Messschaltung und
- Figur 4: ein Spannungs-Zeit-Diagramm.

Elemente gleicher Konstruktion oder Funktion sind figurenübergreifend mit den gleichen Bezugszeichen versehen.

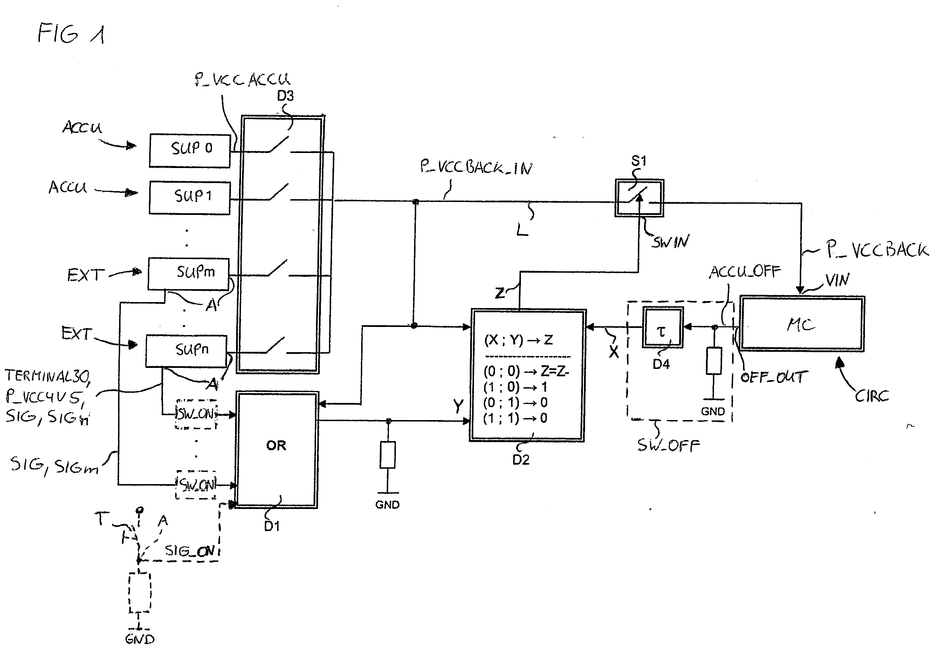

Eine Vorrichtung umfasst eine Schaltungsanordnung CIRC, die bevorzugt als eine Recheneinrichtung MC ausgebildet ist oder die mindestens eine Recheneinrichtung MC aufweist (Figur 1). Die Vorrichtung ist bevorzugt als eine On-Board-Unit eines Fahrzeugs, beispielsweise als eine Maut-On-Board-Unit oder als ein Tachograph, ausgebildet oder ist als ein Teil einer solchen On-Board-Unit oder einer anderen Vorrichtung ausgebildet. Die Vorrichtung kann beispielsweise auch als eine Notstromversorgung oder unterbrechungsfreie Stromversorgung ausgebildet sein oder kann als ein Teil einer solchen ausgebildet sein. Die mindestens eine Recheneinrichtung MC ist vorzugsweise ausgebildet zum Steuern der Vorrichtung.

Die Vorrichtung umfasst mindestens einen Energiespeicher AC-CU, der jeweils eine Quelle SUP0, SUP1 bildet und der ausgebildet ist, mindestens eine Betriebsspannung der Vorrichtung und insbesondere der Schaltungsanordnung CIRC und somit insbesondere auch der mindestens einen Recheneinrichtung MC bereitzustellen. Der mindestens eine Energiespeicher ACCU ist bevorzugt als ein Akkumulator ausgebildet, also als eine wiederaufladbare Batterie. Die durch den mindestens einen Energiespeicher ACCU bereitstellbare Spannung ist in Figur 1 als Akkumulatorspannung P_VCCACCU bezeichnet. Der mindestens eine Energiespeicher ACCU ist insbesondere ein interner Energiespeicher der Vorrichtung, der der Vorrichtung exklusiv zur Verfügung steht.

Die Vorrichtung umfasst ferner mindestens einen Anschluss A, an dem jeweils eine externe Energiequelle EXT elektrisch anschließbar ist zum Bereitstellen der mindestens einen Betriebsspannung. Die jeweilige externe Energiequelle EXT bildet eine jeweilige Quelle SUPm, SUPn. Die mindestens eine externe Energiequelle EXT ist vorzugsweise eine im Fahrzeug für die Versorgung auch anderer Fahrzeugkomponenten vorgesehene Energiequelle, beispielsweise eine Fahrzeugbatterie, die auch als Starterbatterie bezeichnet werden kann, oder ein elektrischer Generator, der auch als Lichtmaschine bezeichnet werden kann. Die mindestens eine externe Energiequelle EXT kann jedoch auch anders ausgebildet sein. Vorzugsweise stellt die mindestens eine externe Energiequelle EXT die mindestens eine Betriebsspannung an mindestens einer Versorgungsklemme TERMINAL30 bereit, die auch als "Klemme 30" bezeichnet werden kann. Der mindestens eine Anschluss A ist daher vorzugsweise vorgesehen für ein elektrisches Koppeln mit der "Klemme 30" des Fahrzeugs, also der Versorgungsklemme TERMINAL30.

Es ist mindestens eine Betriebsspannungsleitung L vorgesehen, die durch den mindestens einen Energiespeicher ACCU und die mindestens eine externe Energiequelle EXT jeweils mit einer der mindestens einen Betriebsspannung beaufschlagbar ist, die in Figur 1 als Eingangsversorgungsspannung P_VCCBACK_IN bezeichnet ist. Dazu ist vorzugsweise ein Versorgungspfadumschalter D3 vorgesehen, der ausgebildet ist, mindestens eine der Quellen SUP0, SUP1, SUPm, SUPn abhängig von einer jeweiligen Verfügbarkeit der Quellen SUP0, SUP1, SUPm, SUPn elektrisch mit der mindestens einen Betriebsspannungsleitung L zu koppeln und die anderen Quellen SUP0, SUP1, SUPm, SUPn, soweit verfügbar, zu entkoppeln. Der Versorgungspfadumschalter D3 ist dabei bevorzugt so ausgebildet, dass bei dem Koppeln und Entkoppeln unterschiedliche Prioritäten der Quellen SUP0, SUP1, SUPm, SUPn berücksichtigt werden. So kann beispielsweise vorgesehen sein, dass die mindestens eine externe Energiequelle EXT eine höhere Priorität aufweist als der mindestens eine Energiespeicher ACCU und dass bei Verfügbarkeit der durch die mindestens eine externe Energiequelle EXT an dem zugehörigen Anschluss A bereitstellbare mindestens einen Betriebsspannung dieser Anschluss A bevorzugt elektrisch mit der mindestens einen Betriebsspannungsleitung L gekoppelt wird und der mindestens eine Energiespeicher ACCU elektrisch entkoppelt wird. Dadurch kann ein Ladezustand des mindestens einen Energiespeichers ACCU geschont werden für Zeiten, in denen die mindestens eine Betriebsspannung an dem mindestens einen Anschluss A nicht bereitgestellt wird. Bevorzugt ist der Versorgungspfadumschalter D3 ferner ausgebildet, den mindestens einen Energiespeicher ACCU abhängig von der mindestens einen Betriebsspannung aufzuladen, die durch die mindestens eine externe Energiequelle EXT an dem zugehörigen Anschluss A bereitgestellt wird.

Die Vorrichtung umfasst ferner mindestens einen Schalter S1, der eingangsseitig elektrisch mit der mindestens einen Betriebsspannungsleitung L gekoppelt ist und der ausgangsseitig elektrisch mit mindestens einem Betriebsspannungseingang VIN der Schaltungsanordnung CIRC und insbesondere der Recheneinrichtung MC gekoppelt ist. Eine ausgangsseitig des mindestens einen Schalters S1 vorherrschende Spannung ist in Figur 1 als Versorgungsspannung P_VCCBACK bezeichnet. Ferner umfasst die Vorrichtung eine Schalteinrichtung D2. Die Schalteinrichtung D2 ist elektrisch mit der mindestens einen Betriebsspannungsleitung L gekoppelt, so dass die Schalteinrichtung D2 über die mindestens eine Betriebsspannungsleitung L mit elektrischer Energie versorgbar ist. Ausgangsseitig ist die Schalteinrichtung D2 elektrisch mit einem jeweiligen Schalteingang SWIN des mindestens einen Schalters S1 gekoppelt zum Zuführen eines Schaltsignals Z. Der mindestens eine Schalter S1 ist ausgebildet, den mindestens einen Betriebsspannungseingang VIN der Schaltungsanordnung CIRC abhängig von dem Schaltsignal Z elektrisch mit der mindestens einen Betriebsspannungsleitung L zu koppeln oder zu entkoppeln.

Die Schalteinrichtung D2 ist eingangsseitig mit mindestens einem Schaltausgang OFF_OUT der Schaltungsanordnung CIRC und insbesondere der mindestens einen Recheneinrichtung MC gekoppelt. Bevorzugt ist die Schalteinrichtung D2 über eine Ausschalteinrichtung SW_OFF mit dem mindestens einen Schaltausgang OFF_OUT gekoppelt. Die Schaltungsanordnung CIRC und insbesondere die mindestens eine Recheneinrichtung MC sind ausgebildet, an dem mindestens einen Schaltausgang ein Ausschaltsignal ACCU_OFF bereitzustellen. Die Ausschalteinrichtung SW_OFF ist vorzugsweise ausgebildet zum Filtern des Ausschaltsignals ACCU_OFF, insbesondere um etwaige Störungen des Ausschaltsignals ACCU_OFF zu unterdrücken. Die Ausschalteinrichtung umfasst vorzugsweise ein Verzögerungsglied D4 zum Verzögern des Ausschaltsignals ACCU_OFF. Eingangsseitig ist das Verzögerungsglied D4 elektrisch mit dem Schaltausgang OFF_OUT gekoppelt. Ausgangsseitig stellt das Verzögerungsglied D4 abhängig von dem Ausschaltsignal ACCU_OFF ein verzögertes Ausschaltsignal X bereit, das der Schalteinrichtung D2 zuführbar ist.

Die Schalteinrichtung D2 ist eingangsseitig ferner mit dem jeweiligen Anschluss A elektrisch gekoppelt zum Erfassen der Verfügbarkeit der mindestens einen durch die mindestens eine externe Energiequelle EXT bereitstellbaren Betriebsspannung an dem jeweiligen Anschluss A. Bevorzugt ist die Schalteinrichtung D2 über eine Oder-Funktionseinheit D1 mit dem jeweiligen Anschluss A elektrisch gekoppelt. Ferner ist die Oder-Funktionseinheit D1 eingangsseitig bevorzugt elektrisch über eine jeweilige Einschalteinrichtung SW_ON mit dem jeweiligen Anschluss A gekoppelt. Die jeweilige Einschalteinrichtung SW_ON kann auch als ein Teil des Versorgungspfadumschalters D3 ausgebildet sein und die Oder-Funktionseinheit D1 kann auch als ein Teil des Versorgungspfadumschalters D3 oder bevorzugt als ein Teil der Schalteinrichtung D2 ausgebildet sein. Die Oder-Funktionseinheit D1 ist ausgebildet, abhängig von der Verfügbarkeit der mindestens einen durch die mindestens eine externe Energiequelle EXT an dem jeweiligen Anschluss A bereitstellbaren Betriebsspannung ausgangsseitig ein Quellenverfügbarkeitssignal Y bereitzustellen, wobei vorzugsweise das Quellenverfügbarkeitssignal Y die Verfügbarkeit signalisiert, wenn an einem Anschluss A die mindestens eine Betriebsspannung verfügbar ist, und das Quellenverfügbarkeitssignal Y die Verfügbarkeit ansonsten nicht signalisiert. Beispielsweise erhält die Oder-Funktionseinheit D1 eingangsseitig jeweils einen High-Pegel, wenn die mindestens eine Betriebsspannung an dem jeweiligen Anschluss A verfügbar ist, und einen Low-Pegel, wenn die mindestens eine Betriebsspannung an dem jeweiligen Anschluss A nicht verfügbar ist. Ausgangsseitig signalisiert die Oder-Funktionseinheit D1 die Verfügbarkeit der mindestens einen Betriebsspannung in Form des Quellenverfügbarkeitssignals Y beispielsweise durch einen High-Pegel und die Nicht-Verfügbarkeit durch einen Low-Pegel. Die jeweilige Einschalteinrichtung SW_ON und die Oder-Funktionseinheit D1 können jedoch auch anders ausgebildet sein.

Die Schalteinrichtung D2 ist ausgebildet, das Schaltsignal Z abhängig von dem verzögerten Ausschaltsignal X und abhängig von dem Quellenverfügbarkeitssignal Y zu erzeugen. Vorzugsweise wird das Schaltsignal Z zum Ausschalten des mindestens einen Schalters S1, zum Beispiel in Form eines High-Pegels, nur dann erzeugt, wenn der Schalteinrichtung D2 durch das Quellenverfügbarkeitssignal Y signalisiert wird, dass aktuell keine externe Energiequelle EXT verfügbar ist, und durch das verzögerte Ausschaltsignal X das Ausschalten signalisiert wird. Vorzugsweise wird das Schaltsignal Z ferner zum Einschalten des mindestens einen Schalters S1 immer dann erzeugt, zum Beispiel in Form eines Low-Pegels, wenn der Schalteinrichtung D2 durch das Quellenverfügbarkeitssignal Y signalisiert wird, dass aktuell mindestens eine externe Energiequelle EXT verfügbar ist, unabhängig von einem Zustand des verzögerten Ausschaltsignals X. Bei aktuell nicht verfügbarer externer Energiequelle EXT und keiner Signalisierung des Ausschaltens durch das verzögerte Ausschaltsignal X wird das Schaltsignal Z unverändert gelassen.

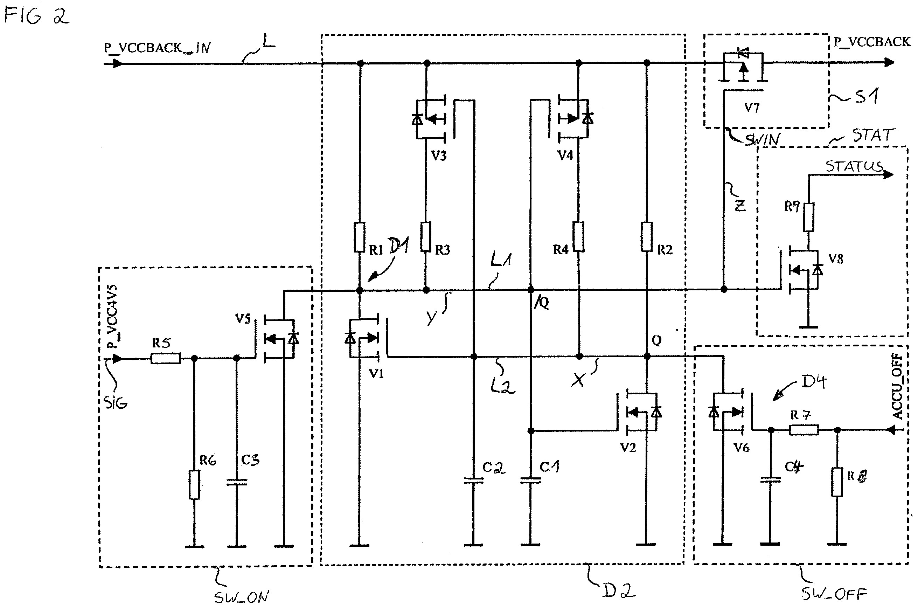

Figur 2 zeigt eine bevorzugte Ausführungsform eines Teils der Vorrichtung. Die Schalteinrichtung D2 ist als eine bistabile Kippstufe ausgebildet. Die Schalteinrichtung D2 umfasst eine erste Signalleitung L1 und eine zweite Signalleitung L2. Die erste Signalleitung L1 bildet einen ersten Eingang der Schalteinrichtung D2, der mit einem jeweiligen Ausgang der jeweiligen Einschalteinrichtung SW_ON elektrisch gekoppelt ist. Ferner bildet die erste Signalleitung L1 einen Ausgang der Schalteinrichtung D2, der mit dem Schalteingang SWIN des mindestens einen Schalters S1 elektrisch gekoppelt ist. Die zweite Signalleitung L2 bildet einen zweiten Eingang der Schalteinrichtung D2, der mit einem jeweiligen Ausgang der jeweiligen Ausschalteinrichtung SW_OFF elektrisch gekoppelt ist. Die erste Signalleitung L1 trägt während eines Betriebs insbesondere das Quellenverfügbarkeitssignal Y. Die zweite Signalleitung L2 trägt während des Betriebs insbesondere das verzögerte Ausschaltsignal X.

Die erste Signalleitung L1 ist elektrisch über einen ersten Widerstand R1 mit der Betriebsspannungsleitung L verbunden und ist elektrisch über einen ersten Transistor V1 mit einem Bezugspotenzial GND verbunden. Ferner ist die erste Signalleitung L1 elektrisch auch über einen ersten Kondensator C1 mit dem Bezugspotenzial GND verbunden. Entsprechend ist die zweite Signalleitung L2 elektrisch über einen zweiten Widerstand R2 mit der Betriebsspannungsleitung L verbunden und ist die zweite Signalleitung L2 elektrisch über einen zweiten Transistor V2 mit dem Bezugspotenzial GND verbunden. Ferner kann die zweite Signalleitung L2 elektrisch auch über einen zweiten Kondensator C2 mit dem Bezugspotenzial GND verbunden sein.

Die erste Signalleitung L1 ist ferner elektrisch über eine Reihenschaltung eines dritten Widerstands R3 und eines dritten Transistors V3 mit der Betriebsspannungsleitung L verbunden. Ein Steuereingang des dritten Transistors V3 ist elektrisch verbunden mit der zweiten Signalleitung L2. Entsprechend ist die zweite Signalleitung L2 elektrisch über eine Reihenschaltung eines vierten Widerstands R4 und eines vierten Transistors V4 mit der Betriebsspannungsleitung L verbunden. Ein Steuereingang des vierten Transistors V4 ist elektrisch verbunden mit der ersten Signalleitung L1.

Die Oder-Funktionseinheit D1 ist als verdrahtetes Oder ausgebildet, das auch als "wired-OR" bezeichnet werden kann. An der ersten Signalleitung L1 können daher auch zwei oder mehr als zwei Einschalteinrichtungen SW ON angeschlossen sein, das heißt, der Ausgang der jeweiligen Einschalteinrichtung SW_ON ist elektrisch mit der ersten Signalleitung L1 verbunden. Wenn mehr als eine Einschalteinrichtung SW_ON vorgesehen ist, dann können diese somit ausgangsseitig elektrisch miteinander und mit der ersten Signalleitung L1 verbunden sein. Die Einschalteinrichtung SW_ON ist vorzugsweise so ausgebildet, dass die erste Signalleitung L1 bei Verfügbarkeit der zugehörigen externen Energiequelle EXT auf den Low-Pegel gezogen wird. Dazu weist die jeweilige Einschalteinrichtung SW_ON beispielsweise einen fünften Transistor V5 auf, der die erste Signalleitung L1 elektrisch mit dem Bezugspotenzial GND koppelt. Vorzugsweise ist ein Steuereingang des fünften Transistors V5 über einen fünften Widerstand R5 elektrisch mit dem zugehörigen Anschluss A gekoppelt und über eine Parallelschaltung eines sechsten Widerstands und eines dritten Kondensators C3 elektrisch mit dem Bezugspotenzial GND verbunden. Dies kann insbesondere eine Zuverlässigkeit des Betriebs erhöhen.

Der jeweiligen Einschalteinrichtung SW_ON ist eingangsseitig ein Quellensignal SIG zuführbar, beispielsweise ein Quellensignal SIGn, das auch als Quellensignal P_VCC4V5 bezeichnet ist und das der Quelle SUPn zugeordnet ist, oder ein Quellensignal SIGm, das der Quelle SUPm zugeordnet ist. Vorzugsweise signalisiert das jeweilige Quellensignal SIG die Verfügbarkeit der von der zugehörigen externen Energiequelle EXT bereitstellbaren mindestens einen Betriebsspannung mit dem High-Pegel und die Nicht-Verfügbarkeit mit dem Low-Pegel. Der High-Pegel des jeweiligen Quellensignals SIG bewirkt so den Low-Pegel des Quellenverfügbarkeitssignals Y. Das Quellenverfügbarkeitssignal Y kann jedoch nur dann den High-Pegel aufweisen, wenn keine Einschalteinrichtung SW_ON die erste Signalleitung L1 auf den Low-Pegel zieht, also alle Quellensignale SIG den Low-Pegel aufweisen und somit keine der externen Energiequellen EXT die mindestens eine Betriebsspannung an einem der gegebenenfalls mehreren Anschlüssen A bereitstellt. Das Quellenverfügbarkeitssignal Y ist somit in dieser Ausführungsform invertiert in Bezug auf die in Figur 1 beschriebene Vorrichtung. Es kann auch vorgesehen sein, dass der jeweilige Anschluss A ohne Zwischenschaltung der jeweiligen Einschalteinrichtung SW_ON elektrisch mit der Oder-Funktionseinheit D1 gekoppelt ist und das jeweilige Quellensignal SIG der Oder-Funktionseinheit D1 somit direkt zuführbar ist.

Alternativ oder zusätzlich zu dem mindestens einen Quellensignal SIG kann auch mindestens ein Einschaltsignal SIG_ON vorgesehen sein, dass der jeweils zugehörigen Einschalteinrichtung SW_ON oder der Oder-Funktionseinheit D1 eingangsseitig zuführbar ist (Figur 1). Das jeweilige Einschaltsignal SIG_ON entspricht in seiner Wirkung vorzugsweise dem jeweiligen Quellensignal SIG, jedoch ist das jeweilige Einschaltsignal SIG_ON unabhängig von der Verfügbarkeit der mindestens einen externen Energiequelle EXT. Das mindestens eine Einschaltsignal SIG_ON ist beispielsweise erzeugbar mittels eines Tasters T, der beispielsweise manuell bedienbar ist. Der Taster T ist beispielsweise elektrisch gekoppelt mit der Eingangsversorgungsspannung P_VCCBACK_IN oder der Akkumulatorspannung P_VCCACCU oder dem High-Pegel und ist vorzugsweise elektrisch über einen Widerstand mit dem Bezugspotenzial GND gekoppelt. Ein Mittelabgriff zwischen dem Taster T und dem Widerstand entspricht beispielsweise dem Anschluss A, an dem in diesem Fall jedoch der Taster T und der Widerstand angeschlossen sind anstatt der externen Energiequelle EXT. Vorzugsweise ist das jeweilige Einschaltsignal SIG_ON durch Betätigen des jeweiligen Tasters T erzeugbar. Entsprechend dem High-Pegel des jeweiligen Quellensignals SIG bewirkt der High-Pegel des jeweiligen Einschaltsignals SIG_ON den Low-Pegel des Quellenverfügbarkeitssignals Y, das in diesem Fall jedoch das Betätigen des Tasters T anzeigt anstatt der Verfügbarkeit der mindestens einen externen Energiequelle EXT und in diesem Fall daher auch als Einschaltsignalverfügbarkeitssignal bezeichnet werden kann. Das Einschaltsignal SIG_ON kann jedoch auch auf andere Weise erzeugt werden. Es muss nicht vorgesehen sein, dass der mindestens eine Anschluss A mit einer jeweiligen externen Energiequelle EXT koppelbar ist. Der mindestens eine Anschluss A kann ebenso nur vorgesehen sein zum Zuführen des jeweiligen Einschaltsignals SIG_ON. Aufgrund der gleichen Wirkung des jeweiligen Quellensignals SIG und des jeweiligen Einschaltsignals SIG_ON auf das Quellenverfügbarkeitssignal Y wird hier nicht weiter zwischen diesen unterschieden. Die Ausführungungen in Bezug auf die mindestens eine externe Energiequelle EXT und das jeweils zugehörige Quellensignal SIG gelten entsprechend auch in Bezug auf das Einschaltsignal SIG_ON.

Die Ausschalteinrichtung SW_OFF weist vorzugsweise einen sechsten Transistor V6 auf, der die zweite Signalleitung L2 elektrisch mit dem Bezugspotenzial GND koppelt. Vorzugsweise ist ein Steuereingang des sechsten Transistors V6 über einen siebten Widerstand R7 elektrisch mit dem zugehörigen Schaltausgang OFF_OUT der Schaltungsanordnung CIRC und insbesondere der mindestens einen Recheneinrichtung MC gekoppelt. Ferner ist der Steuereingang des sechsten Transistors V6 über einen vierten Kondensator C4 mit dem Bezugspotenzial GND verbunden. Eingangsseitig ist die Ausschalteinrichtung SW OFF vorzugsweise über einen achten Widerstand R8 mit dem Bezugspotenzial GND verbunden. Dadurch ist einerseits eine hohe Betriebssicherheit möglich und ist andererseits auch das Verzögerungsglied D4 realisiert.

Der mindestens eine Schalter S1 ist vorzugsweise durch einen jeweiligen siebten Transistor V7 gebildet, dessen Steuereingang den Schalteingang SWIN bildet, der elektrisch mit der ersten Signalleitung L1 verbunden ist.

Es kann ferner eine Statusausgabeeinrichtung STAT vorgesehen sein zum Ausgeben eines aktuellen Schaltzustands des mindestens einen Schalters S1. Die Statusausgabeeinrichtung STAT ist eingangsseitig elektrisch mit der ersten Signalleitung L1 verbunden und stellt ausgangsseitig ein Statussignal STATUS bereit. Beispielsweise umfasst die Statusausgabeeinrichtung STAT einen achten Transistor V8, dessen Steuereingang den Eingang der Statusausgabeeinrichtung STAT bildet, und einen neunten Widerstand R9. Ein Ausgang der Statusausgabeeinrichtung STAT ist über eine Reihenschaltung des neunten Widerstands R9 und des achten Transistors V8 elektrisch mit dem Bezugspotenzial GND verbunden. Die Statusausgabeeinrichtung STAT ist insbesondere optional vorgesehen für den Fall, dass der Schaltzustand des mindestens einen Schalters S1 außerhalb eines geschlossenen Gehäuses der Vorrichtung überprüfbar sein soll. Dann ist der Ausgang der Statusausgabeeinrichtung STAT auch ein Ausgang der Vorrichtung, ist also von außerhalb des Gehäuses zugänglich.

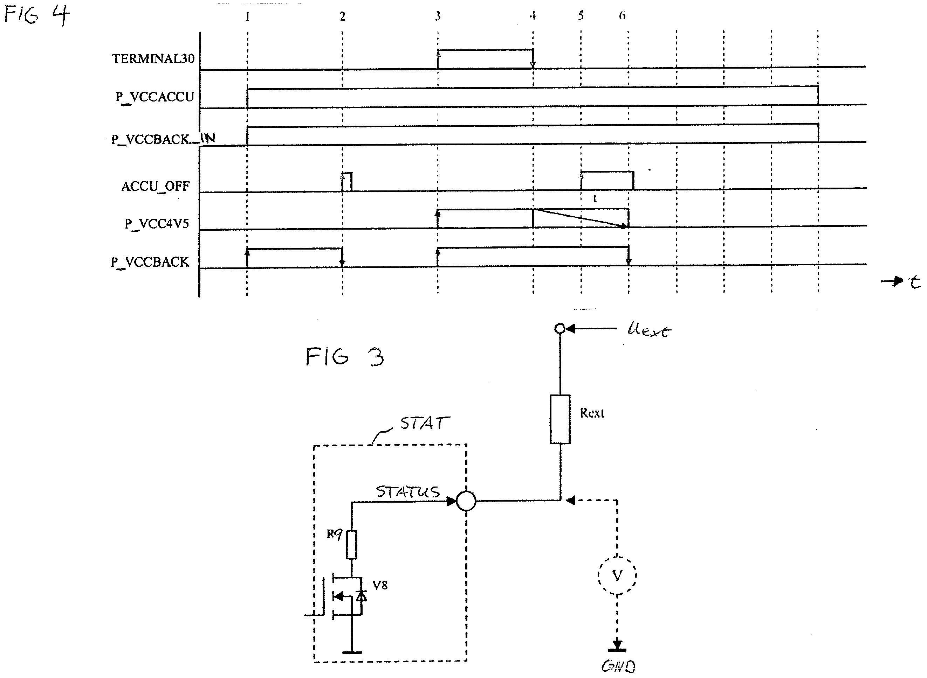

Figur 3 zeigt eine Ausführungsform einer Messschaltung zum Erfassen des Statussignals STATUS. Der Ausgang der Statusausgabeeinrichtung STAT ist über einen externen Widerstand Rext elektrisch mit einem externen Versorgungspotenzial Uext verbunden. Am Ausgang der Statusausgabeeinrichtung STAT ist gegenüber dem Bezugspotenzial GND eine Messspannung abgreifbar.

Beispielsweise signalisiert das Statussignal STATUS mit dem High-Pegel, dass der mindestens eine Schalter S1 geschlossen ist, und mit dem Low-Pegel, dass der mindestens eine Schalter S1 offen ist.

Figur 4 zeigt ein Spannungs-Zeit-Diagramm mit Signalverläufen der Akkumulatorspannung P_VCCACCU, der Eingangsversorgungsspannung P_VCCBACK_IN, des Ausschaltsignals ACCU_OFF, des Quellensignals P_VCC4V5, der Versorgungsspannung P_VCCBACK sowie einer Spannung an der Versorgungsklemme TERMINAL30. Zu einem mit 1 bezeichneten Zeitpunkt wird der mindestens eine Energiespeicher ACCU angeschlossen und der mindestens eine Schalter S1 wird automatisch eingeschaltet. Zu einem mit 2 bezeichneten Zeitpunkt wird das Ausschaltsignal ACCU_OFF zum Signalisieren des Ausschaltens gesetzt. Infolgedessen wird der mindestens eine Schalter S1 ausgeschaltet. Zu einem mit 3 bezeichneten Zeitpunkt wird an der Versorgungsklemme TERMINAL30 die mindestens eine Betriebsspannung verfügbar. Der mindestens eine Schalter S1 wird eingeschaltet. Zu einem mit 4 bezeichneten Zeitpunkt wird die an der Versorgungsklemme TERMINAL30 bereitgestellte mindestens eine Betriebsspannung ausgeschaltet. Infolgedessen fällt das Quellensignal P_VCC4V5 auf den Low-Pegel. Zu einem mit 5 bezeichneten Zeitpunkt wird das Ausschaltsignal ACCU_OFF zum Signalisieren des Ausschaltens gesetzt. Zu einem mit 6 bezeichneten Zeitpunkt wird der mindestens eine Schalter S1 automatisch ausgeschaltet. Eine Zeitdauer von dem Signalisieren des Ausschaltens bis zum Ausschalten ist abhängig von einer Größe der Kapazitäten am Quellensignal P_VCC4V5 und beträgt beispielsweise etwa zwei bis drei Sekunden. Der mindestens eine Schalter S1 wird erst ausgeschaltet, wenn sich diese Kapazitäten entladen haben.

Sobald die Eingangsversorgungsspannung P_VCCBACK_IN verfügbar ist, schaltet der erste Transistor V1 als erster durch. Eine Reihenfolge oder Geschwindigkeit des Schaltens ist abhängig von einer jeweiligen Kapazität des ersten und des zweiten Kondensators. Die Kapazität des zweiten Kondensators C2 ist bevorzugt kleiner als die des ersten Kondensators C1, so dass immer zuerst der erste Transistor V1 und infolgedessen der vierte Transistor V4 durchgeschaltet wird. Die zweite Signalleitung L2 wird dadurch auf den High-Pegel gezogen. Die erste Signalleitung L1 weist den Low-Pegel auf, wodurch der mindestens eine Schalter S1 eingeschaltet wird.

Wird auf die zweite Signalleitung L2 ein Low-Pegel-Impuls mit einer Mindestdauer von beispielsweise etwa einer Millisekunde gegeben, dann sperrt der erste Transistor V1 und die erste Signalleitung L1 wird über den ersten Widerstand R1 auf den High-Pegel gezogen. Dadurch beginnt der zweite Transistor V2 zu leiten und zieht die zweite Signalleitung L2 auf den Low-Pegel. Dieser Schaltzustand wird durch die Selbsterhaltung der Kippstufe aufrecht erhalten, bis ein Low-Pegel-Impuls mit einer Mindestdauer von beispielsweise etwa einer Millisekunde auf die erste Signalleitung L1 gegeben wird.

Der erste und zweite Transistor V1, V2, der fünfte und sechste Transistor V5, V6 und der achte Transistor V8 sind beispielsweise jeweils durch einen Si1902DL gebildet. Der dritte und vierte Transistor V3, V4 sind beispielsweise jeweils durch einen Si3911DV gebildet. Der siebte Transistor V7 ist beispielsweise durch einen Si4401BDY gebildet. Ein Widerstandswert des ersten und zweiten Widerstands R1, R2 beträgt beispielsweise jeweils ein Megaohm. Ein Widerstandswert des dritten und vierten Widerstands beträgt beispielsweise zehn Kiloohm. Ein Widerstandswert des fünften, sechsten, siebten und achten sowie des externen Widerstands R5, R6, R7, R8, Rext beträgt beispielsweise einhundert Kiloohm. Ein Widerstandswert des neunten Widerstands R9 beträgt beispielsweise ein Kiloohm. Eine Kapazität des ersten Kondensators C1 beträgt beispielsweise zehn Nanofarad. Eine Kapazität des zweiten Kondensators C2 beträgt bevorzugt einhundertstel der Kapazität des ersten Kondensators C1 und beträgt beispielsweise 0,1 Nanofarad. Eine Kapazität des dritten und des vierten Kondensators C3, C4 beträgt beispielsweise einhundert Nanofarad. Die Vorrichtung kann jedoch auch anders ausgebildet oder anders dimensioniert sein.

Da N-Kanal MOSFET-Transistoren einen Leckstrom in einer Größenordung von beispielsweise einem Mikroampere bei einer Temperatur von 25°C und fünf Mikroampere bei 85°C über ihre Gate-Source-Strecke besitzen, besteht die Gefahr, dass insbesondere bei sehr hochohmigem ersten und zweiten Widerstand R1, R2 ein so großer Spannungsabfall über diesen entsteht, dass der erste beziehungsweise zweite Transistor V1, V2 eingeschaltet und die erste oder zweite Signalleitung L1, L2 auf den Low-Pegel gezogen wird. Infolgedessen kann sich ein Schaltzustand der Kippstufe und somit des mindestens einen ersten Schalters S1 unerwünscht ändern.

In einer ersten Ausführungsform sind der erste und der zweite Widerstand R1, R2 daher so dimensioniert, dass mindestens die halbe Eingangsversorgungsspannung P_VCCBACK_IN an diesen abfällt, wenn die zu berücksichtigenden maximalen Leckströme über die Transistoren fließen. Bei hohen zu berücksichtigenden Leckströmen, zum Beispiel zehn Mikroampere, dürfen der erste und zweite Widerstand R1, R2 dazu jedoch nur einen geringen Widerstandswert von beispielsweise 150 Kiloohm aufweisen. Dies kann jedoch zu einem hohen Nennstrom der Einschaltvorrichtung D2 und somit zu einem unerwünscht hohen Entladestrom des mindestens einen Energiespeichers ACCU führen.

In einer zweiten, bevorzugten Ausführungsform ist vorgesehen, die Leckströme über den jeweils als P-Kanal-Transistor ausgebildeten dritten und vierten Transistor V3, V4 und den dritten und vierten Widerstand R3, R4 abzuleiten. Der dritte und vierte Widerstand R3, R4 wird dazu jeweils niederohmig gewählt. Der dritte und vierte Widerstand R3, R4 dient auch als Strombegrenzung beim Umschalten, wenn gleichzeitig sowohl die erste als auch die zweite Signalleitung L1, L2 auf den Low-Pegel gezogen werden. In dieser Ausführungsform dürfen der erste und der zweite Widerstand R1, R2 hochohmig dimensioniert sein, so dass ein geringer Nennstrom resultiert.

## Patentansprüche

1. Vorrichtung, die umfasst
- mindestens eine Schaltungsanordnung (CIRC), die mindestens einen Betriebsspannungseingang (VIN) und mindestens einen Schaltausgang (OFF_OUT) aufweist,
- mindestens einen Energiespeicher (ACCU) zum Bereitstellen mindestens einer Betriebsspannung für die Schaltungsanordnung (CIRC),
- mindestens einen Anschluss (A), der mit einer jeweiligen externen Energiequelle (EXT) koppelbar ist zum Bereitstellen der mindestens einen Betriebsspannung für die Schaltungsanordnung (CIRC),
- mindestens eine Betriebsspannungsleitung (L), die durch die mindestens eine externe Energiequelle (EXT) und den mindestens einen Energiespeicher (ACCU) mit der mindestens einen Betriebsspannung beaufschlagbar ist,
- mindestens einen Schalter (S1), der eingangsseitig elektrisch mit der mindestens einen Betriebsspannungsleitung (L) und ausgangsseitig elektrisch mit dem mindestens einen Betriebsspannungseingang (VIN) gekoppelt ist und der einen Schalteingang (SWIN) aufweist und der abhängig von einem Schaltsignal (Z) an dem Schalteingang (SWIN) die mindestens eine Betriebsspannungsleitung (L) elektrisch mit dem mindestens einen Betriebsspannungseingang (VIN) koppelt oder diese elektrisch voneinander trennt,
- eine Schalteinrichtung (D2), die eingangsseitig elektrisch mit dem mindestens einen Anschluss (A) gekoppelt ist zum Erkennen einer Verfügbarkeit der mindestens einen von der mindestens einen externen Energiequelle (EXT) bereitstellbaren Betriebsspannung und die eingangsseitig elektrisch mit dem mindestens einen Schaltausgang (OFF_OUT) gekoppelt ist und die ausgangsseitig elektrisch mit dem Schalteingang (SWIN) des mindestens einen Schalters (S1) gekoppelt ist zum Zuführen des Schaltsignals (Z) und die ausgebildet ist, das Schaltsignal (Z) zu erzeugen abhängig von der Verfügbarkeit der von der mindestens einen externen Energiequelle (EXT) bereitstellbaren mindestens einen Betriebsspannung und abhängig von einem von der Schaltungsanordnung (CIRC) an dem mindestens einen Schaltausgang (OFF_OUT) bereitstellbaren Ausschaltsignal (ACCU_OFF),
wobei
- die Schalteinrichtung (D2) als eine bistabile Kippstufe ausgebildet ist, die ausgebildet ist zum Erzeugen des Schaltsignals (Z)
-- zum Einschalten des mindestens einen Schalters (S1), wenn die mindestens eine von der mindestens einen externen Energiequelle (EXT) bereitstellbare Betriebsspannung an dem mindestens einen Anschluss (A) verfügbar ist unabhängig von dem Ausschaltsignal (ACCU_OFF),
-- zum Ausschalten des mindestens einen Schalters (S1), wenn die mindestens eine von der mindestens einen externen Energiequelle (EXT) bereitstellbare Betriebsspannung nicht an dem mindestens einen Anschluss (A) verfügbar ist und das Ausschaltsignal (ACCU_OFF) das Ausschalten signalisiert und
-- zum Beibehalten eines aktuellen Schaltzustands des mindestens einen Schalters (S1), wenn die mindestens eine von der mindestens einen externen Energiequelle (EXT) bereitstellbare Betriebsspannung nicht an dem mindestens einen Anschluss (A) verfügbar ist und das Ausschaltsignal (ACCU_OFF) das Ausschalten nicht signalisiert,
**dadurch gekennzeichnet, dass**
die bistabile Kippstufe der Schalteinrichtung (D2) dadurch gebildet wird, dass
- die Schalteinrichtung (D2) eine erste und eine zweite Signalleitung (L1, L2) aufweist und
- die erste Signalleitung (L1) mit dem Schalteingang (SWIN) elektrisch gekoppelt ist,
- die erste Signalleitung (L1) über einen ersten Widerstand (R1) mit der Betriebsspannungsleitung (L) und über einen ersten Transistor (V1) mit einem Bezugspotenzial (GND) verbunden ist und ein Steueranschluss des ersten Transistors (V1) mit der zweiten Signalleitung (L2) verbunden ist,
- die zweite Signalleitung (L2) über einen zweiten Widerstand (R2) mit der Betriebsspannungsleitung (L) und über einen zweiten Transistor (V2) mit dem Bezugspotenzial (GND) verbunden ist und ein Steueranschluss des zweiten Transistors (V2) mit der ersten Signalleitung (L1) verbunden ist,
- die erste Signalleitung (L1) über eine Reihenschaltung eines dritten Widerstands (R3) und eines dritten Transistors (V3) mit der Betriebsspannungsleitung (L) verbunden ist und ein Steueranschluss des dritten Transistors (V3) mit der zweiten Signalleitung (L2) verbunden ist,
- die zweite Signalleitung (L2) über eine Reihenschaltung eines vierten Widerstands (R4) und eines vierten Transistors (V4) mit der Betriebsspannungsleitung (L) verbunden ist und ein Steueranschluss des vierten Transistors (V4) mit der ersten Signalleitung (L1) verbunden ist,
- die erste Signalleitung (L1) über einen ersten Kondensator (C1) mit dem Bezugspotenzial (GND) verbunden ist,
wobei in der Vorrichtung
- mindestens eine Einschalteinrichtung (SW_ON) vorgesehen ist, die eingangsseitig elektrisch jeweils mit einem Anschluss (A) gekoppelt ist und die ausgangsseitig elektrisch jeweils mit der ersten Signalleitung (L1) verbunden ist und die ausgebildet ist, bei Verfügbarkeit der mindestens einen von der mindestens einen externen Energiequelle (EXT) bereitstellbaren Betriebsspannung einen Pegel der ersten Signalleitung (L1) auf einen Low-Pegel zu ziehen, und
- mindestens eine Ausschalteinrichtung (SW_OFF) vorgesehen ist, die eingangsseitig elektrisch jeweils mit dem mindestens einen Schaltausgang (OFF_OUT) gekoppelt ist und die ausgangsseitig elektrisch jeweils mit der zweiten Signalleitung (L2) verbunden ist und die ausgebildet ist, abhängig von dem Ausschaltsignal (ACCU_OFF) einen Pegel der zweiten Signalleitung (L2) auf den Low-Pegel zu ziehen.

2. Vorrichtung nach Anspruch 1, bei der die Schaltungsanordnung (CIRC) als Recheneinrichtung (MC) ausgebildet ist oder die mindestens eine Recheneinrichtung (MC) umfasst, wobei die mindestens eine Recheneinrichtung (MC) über die mindestens eine über den mindestens einen Betriebsspannungseingang (VIN) bereitstellbare Betriebsspannung versorgbar ist und ausgebildet ist zum Erzeugen des Ausschaltsignals (ACCU_OFF).

3. Vorrichtung nach Anspruch 1 oder 2, bei der die Ausschalteinrichtung (SW_OFF) ein Verzögerungsglied (D4) umfasst zum Verzögern des Ziehens des Pegels der zweiten Signalleitung (L2) auf den Low-Pegel in Bezug auf das Ausschaltsignal (AC-CU_OFF).

4. Vorrichtung nach einem der Ansprüche 1 bis 3, bei der die zweite Signalleitung (L2) über einen zweiten Kondensator (C2) mit dem Bezugspotenzial (GND) verbunden ist und der erste Kondensator (C1) eine größere Kapazität aufweist als der zweite Kondensator (C2).

## Claims

1. Apparatus, which comprises
- at least one circuit arrangement (CIRC), which has at least one operating voltage input (VIN) and at least one switching output (OFF_OUT),
- at least one energy store (ACCU) for providing at least one operating voltage for the circuit arrangement (CIRC),
- at least one connection (A), which can be coupled to a respective external energy source (EXT) for the purpose of providing the at least one operating voltage for the circuit arrangement (CIRC),
- at least one operating voltage line (L), which can be supplied with the at least one operating voltage by the at least one external energy source (EXT) and the at least one energy store (ACCU),
- at least one switch (S1), which is electrically coupled on the input side to the at least one operating voltage line (L) and is electrically coupled on the output side to the at least one operating voltage input (VIN), said switch having a switching input (SWIN) and electrically coupling the at least one operating voltage line (L) to the at least one operating voltage input (VIN) or electrically isolating said at least one operating voltage line therefrom depending on a switching signal (Z) at the switching input (SWIN),
- a switching device (D2), which is electrically coupled on the input side to the at least one connection (A) for the purpose of identifying an availability of the at least one operating voltage that can be provided by the at least one external energy source (EXT), said switching device being electrically coupled on the input side to the at least one switching output (OFF_OUT) and electrically coupled on the output side to the switching input (SWIN) of the at least one switch (S1) for the purpose of supplying the switching signal (Z), said switching device being configured to generate the switching signal (Z) depending on the availability of the at least one operating voltage that can be provided by the at least one external energy source (EXT) and depending on a switch-off signal (ACCU_OFF) that can be provided at the at least one switching output (OFF_OUT) by the circuit arrangement (CIRC),
wherein
- the switching device (D2) is configured as a bistable multivibrator, which is configured to generate the switching signal (Z)
- - for the purpose of switching on the at least one switch (S1) when the at least one operating voltage that can be provided by the at least one external energy source (EXT) is available at the at least one connection (A) independently of the switch-off signal (ACCU_OFF),
- - for the purpose of switching off the at least one switch (S1) when the at least one operating voltage that can be provided by the at least one external energy source (EXT) is not available at the at least one connection (A) and the switch-off signal (ACCU_OFF) signals the switching-off and
- - for the purpose of maintaining a present switching state of the at least one switch (S1) when the at least one operating voltage that can be provided by the at least one external energy source (EXT) is not available at the at least one connection (A) and the switch-off signal (ACCU_OFF) does not signal the switching-off,
**characterized in that**
the bistable multivibrator of the switching device (D2) is formed by virtue of the fact that
- the switching device (D2) has a first and a second signal line (L1, L2) and
- the first signal line (L1) is electrically coupled to the switching input (SWAIN),
- the first signal line (L1) is connected to the operating voltage line (L) by means of a first resistor (R1) and is connected to a reference-ground potential (GND) by means of a first transistor (V1) and a control terminal of the first transistor (V1) is connected to the second signal line (L2),
- the second signal line (L2) is connected to the operating voltage line (L) by means of a second resistor (R2) and is connected to the reference-ground potential (GND) by means of a second transistor (V2) and a control terminal of the second transistor (V2) is connected to the first signal line (L1),
- the first signal line (L1) is connected to the operating voltage line (L) by means of a series connection comprising a third resistor (R3) and a third transistor (V3) and a control terminal of the third transistor (V3) is connected to the second signal line (L2),
- the second signal line (L2) is connected to the operating voltage line (L) by means of a series connection comprising a fourth resistor (R4) and a fourth transistor (V4) and a control terminal of the fourth transistor (V4) is connected to the first signal line (L1),
- the first signal line (L1) is connected to the reference-ground potential (GND) by means of a first capacitor (C1), wherein the apparatus has
- at least one switch-on device (SW_ON) provided in it, which is electrically coupled on the input side to a respective connection (A) and which is electrically connected on the output side to the respective first signal line (L1), said switch-on device being configured to pull a level of the first signal line (L1) to a low level if the at least one operating voltage that can be provided by the at least one external energy source (EXT) is available, and
- at least one switch-off device (SW_OFF) provided in it, which is electrically coupled on the input side to the respective at least one switching output (OFF_OUT) and which is electrically connected on the output side to the respective second signal line (L2), said switch-off device being configured to pull a level of the second signal line (L2) to the low level depending on the switch-off signal (ACCU_OFF).

2. Apparatus according to Claim 1, in which the circuit arrangement (CIRC) is configured as a computation device (MC) or comprises the at least one computation device (MC), wherein the at least one computation device (MC) can be supplied with power by means of the at least one operating voltage that can be provided by means of the at least one operating voltage input (VIN) and said at least one computation device is configured to generate the switch-off signal (ACCU_OFF).

3. Apparatus according to Claim 1 or 2, in which the switch-off device (SW_OFF) comprises a delay element (D4) for the purpose of delaying the pulling of the level of the second signal line (L2) to the low level in relation to the switch-off signal (ACCU_OFF).

4. Apparatus according to one of Claims 1 to 3, in which the second signal line (L2) is connected to the reference-ground potential (GND) by means of a second capacitor (C2) and the first capacitor (C1) has a larger capacitance than the second capacitor (C2).

## Revendications

1. Dispositif comprenant
- au moins un système de circuits (CIRC) qui comporte au moins une entrée de tension de fonctionnement (VIN) et au moins une sortie de commutation (OFF_OUT),
- au moins un accumulateur d'énergie (ACCU) destiné à fournir au moins une tension de fonctionnement destinée au système de circuits (CIRC),
- au moins une borne (A) qui peut être couplée à une source d'énergie externe (EXT) respective pour fournir l'au moins une tension de fonctionnement destinée au système de circuits (CIRC),
- au moins une ligne de tension de fonctionnement (L) qui peut être soumise à l'au moins une tension de fonctionnement par l'au moins une source d'énergie externe (EXT) et l'au moins un accumulateur d'énergie (ACCU),
- au moins un commutateur (S1) qui est couplé électriquement côté entrée à l'au moins une ligne de tension de fonctionnement (L) et est couplé électriquement côté sortie à l'au moins une entrée de tension de fonctionnement (VIN), qui présente une entrée de commutation (SWIN) et qui couple électriquement l'au moins une ligne de tension de fonctionnement (L) à l'au moins une entrée de tension de fonctionnement (VIN) ou qui les sépare électriquement l'une de l'autre en fonction d'un signal de commutation (Z) sur l'entrée de commutation (SWIN),
- un dispositif de commutation (D2) qui est couplé électriquement côté entrée à l'au moins une borne (A) pour détecter une disponibilité de l'au moins tension de fonctionnement pouvant être fournie par l'au moins une source d'énergie externe (EXT) et qui est couplé électriquement côté entrée à l'au moins une sortie de commutation (OFF_OUT) et qui est couplé électriquement côté sortie à l'entrée de commutation (SWIN) de l'au moins un commutateur (S1) pour délivrer le signal de commutation (Z) et qui est conçu pour générer le signal de commutation (Z) en fonction de la disponibilité de l'au moins une tension de fonctionnement pouvant être fournie par l'au moins une source d'énergie externe (EXT) et en fonction d'un signal de désactivation (ACCU_OFF) pouvant être fourni par le système de circuits (CIRC) à l'au moins une sortie de commutation (OFF_OUT),
dans lequel
- le dispositif de commutation (D2) est réalisé sous la forme d'une bascule bistable qui est réalisée de manière à générer le signal de commutation (Z)
-- pour activer l'au moins un commutateur (S1) si l'au moins une tension de fonctionnement pouvant être fournie par la source d'énergie externe (EXT) est disponible sur l'au moins une borne (A) indépendamment du signal de désactivation (ACCU_OFF) ,
-- pour désactiver l'au moins un commutateur (S1) si l'au moins une tension de fonctionnement pouvant être fournie par l'au moins une source d'énergie externe (EXT) n'est pas disponible sur l'au moins une borne (A) et si le signal de désactivation (ACCU_OFF) signale la désactivation, et
-- pour maintenir un état de commutation actuel de l'au moins un commutateur (S1) si l'au moins une tension de fonctionnement pouvant être fournie par l'au moins une source d'énergie externe (EXT) n'est pas disponible sur l'au moins une borne (A) et si le signal de désactivation (ACCU_OFF) ne signale pas la désactivation,
**caractérisé en ce que** la bascule bistable du dispositif de commutation (D2) est réalisée de manière à ce que
- le dispositif de commutation (D2) comporte des première et deuxième lignes de signal (L1, L2), et
- la première ligne de signal (L1) est couplée électriquement à l'entrée de commutation (SWIN),
- la première ligne de signal (L1) est reliée par l'intermédiaire d'une première résistance (R1) à la ligne de tension de fonctionnement (L) et par l'intermédiaire d'un premier transistor (V1) à un potentiel de référence (GND) et une borne de commande du premier transistor (V1) est reliée à la deuxième ligne de signal (L2),
- la deuxième ligne de signal (L2) est reliée par l'intermédiaire d'une deuxième résistance (R21) à la ligne de tension de fonctionnement (L) et par l'intermédiaire d'un deuxième transistor (V2) au potentiel de référence (GND) et une borne de commande du deuxième transistor (V2) est reliée à la première ligne de signal (L1),
- la première ligne de signal (L1) est reliée par l'intermédiaire d'un circuit série d'une troisième résistance (R3) et d'un troisième transistor (V3) à la ligne de tension de fonctionnement (L) et une borne de commande du troisième transistor (V3) est reliée à la deuxième ligne de signal (L2),
- la deuxième ligne de signal (L2) est reliée par l'intermédiaire d'un circuit série d'une quatrième résistance (R4) et d'un quatrième transistor (V4) à la ligne de tension de fonctionnement (L) et une borne de commande du quatrième transistor (V4) est reliée à la première ligne de signal (L1),
- la première ligne de signal (L1) est reliée par l'intermédiaire d'un premier condensateur (C1) au potentiel de référence (GND),
dans lequel, dans le dispositif,
- il est prévu au moins un dispositif d'activation (SW_ON) qui est respectivement relié électriquement côté entrée à une borne (A) et qui est respectivement relié électriquement côté sortie à la première ligne de signal (L1) et qui est réalisé pour faire passer un niveau de la première ligne de signal (L1) à un niveau bas lors de la disponibilité de l'au moins une tension de fonctionnement pouvant être fournie par l'au moins une source d'énergie externe (EXT), et
- il est prévu au moins un dispositif de désactivation (SW_OFF) qui est respectivement couplé électriquement côté entrée à l'au moins une sortie de commutation (OFF_OUT) et qui est respectivement relié électriquement côté sortie à la deuxième ligne de signal (L2) et qui est réalisé pour faire passer un niveau de la deuxième ligne de signal (L2) au niveau bas en fonction du signal de désactivation (ACCU_OFF).

2. Dispositif selon la revendication 1, dans lequel le système de circuits (CIRC) est réalisé sous la forme d'un dispositif de calcul (MC) ou comprend l'au moins un dispositif de calcul (MC), dans lequel l'au moins un dispositif de calcul (MC) peut être alimenté par l'intermédiaire de l'au moins une tension de fonctionnement pouvant être fournie par l'intermédiaire de l'au moins une entrée de tension de fonctionnement (VIN) et est conçu pour générer le signal de désactivation (ACCU_OFF).

3. Dispositif selon la revendication 1 ou 2, dans lequel le dispositif de désactivation (SW_OFF) comprend un élément retardateur (D4) destiné à retarder le passage du niveau de la deuxième ligne de signal (L2) au niveau bas par rapport au signal de désactivation (ACCU_OFF).

4. Dispositif selon l'une quelconque des revendications 1 à 3, dans lequel la deuxième ligne de signal (L2) est reliée par l'intermédiaire d'un deuxième condensateur (C2) au potentiel de référence (GND) et le premier condensateur (C1) présente une capacité plus élevée que le deuxième condensateur (C2) .
